# EUROPEAN PATENT APPLICATION

(11) **EP 1 126 194 A2**
(43) Date of publication of application: **22.08.2001**
(21) Application number: 01101372.9
(22) Date of filing: 22.01.2001
(51) Int. Cl.: F16H 45/02

(54) **Lock-up clutch**

(30) Priority: 15.02.2000 JP 2000036554
(71) Applicant: Valeo Unisia Transmissions Kabushiki Kaisha, Atsugi-shi, Kanagawa 243-0213 (JP)
(72) Inventor: Yamamoto, Hiroki, Atsugi-shi, Kanagawa 243-0213 (JP)
(74) Representative: Schmitz, Hans-Werner, Dipl.-Ing.

(57) **Abstract**

A clutch device (1) includes a substantially annular input plate (44) connected to a converter cover (3), a substantially annular output plate (45) connected to a turbine hub (4) so that the output plate (45) is brought into contact with the input plate (44) when the clutch device (1) is engaged. The output plate (45) has an inner toothed portion (48) formed on its inner peripheral portion. A substantially cylindrical flanged portion (40) is attached to the turbine hub (4) serving as an output member. The substantially cylindrical flanged portion (40) has an outer toothed portion formed on its outer peripheral portion and being in meshed-engagement with the inner toothed portion (48) to allow axial sliding motion of the output plate (45) relative to the substantially cylindrical flanged portion (40) and to prevent relative rotation of the output plate (45) to the substantially cylindrical flanged portion (40). A lubrication hole (41) is formed in a bottom between two adjacent teeth of the outer toothed portion of the substantially cylindrical flanged portion (40). The lubrication hole (41) is formed as a slotted hole that elongates in a direction of a tooth trace of the outer toothed portion.

## Description

### TECHNICAL FIELD

The present invention relates to a clutch device suitable for a lock-up clutch built in a torque converter used in an automatic transmission of an automotive vehicle, and specifically to a wet multiple-disk clutch device which is hydraulically operated by way of hydraulic fluid pressure and whose driving and driven plates are lubricated with hydraulic fluid.

### BACKGROUND ART

As is generally known, a lock-up device, which is provided between an input member (a driving member) such as a converter cover of a torque converter and an output member (a driven member) such as a turbine, includes a clutch device that engages the input member with or disengages it from the output member, and a damping device, such as a plurality of torsion dampers or torsion springs, connected in series with the clutch device. One such torque-converter lock-up clutch device with torsion dampers has been disclosed in Japanese Patent Provisional Publication No. 5-322002 (hereinafter is referred to as JP5-322002). The torque-converter lock-up clutch device disclosed in JP5-322002, is comprised of substantially annular input plates (driving disks) connected to or splined to the input member and substantially annular output plates (driven plates) which are brought into contact with the input plates when the clutch is engaged. Each of the output plates is constructed as an internal spline plate, and the internal splines of each output plate are in meshed-engagement with an outer toothed portion (external splines) of a substantially cylindrical flanged portion attached to the output member, so as to permit the output plates to axially move along the outer toothed portion of the cylindrical flanged portion. The clutch device disclosed in JP5-322002 has a plurality of lubrication holes (through-holes) bored in the bottom of the outer toothed portion of the cylindrical flanged portion, in order to supply the sliding clutch parts of the lock-up clutch device with hydraulic fluid. In the clutch device disclosed in JP5-322002, each of the lubrication holes (through-holes) is formed as a radially-extending through-hole having a circular cross section. Also, there is a tendency for the through holes formed in one of the two adjacent tooth spaces of the outer toothed portion to be out of alignment with those formed in the other tooth space. In such a case, the opening area of each of the through holes tends to reduce undesiredly, depending on a relative position between the meshed internal-spline portion of each output plate and the through holes formed in the tooth space. The reduced opening area of each through opening would cause insufficient hydraulic fluid flow (lubricating oil flow) towards the sliding parts of the clutch device. This results in a disturbance in the behavior in the input and/or output plates, thus preventing a smooth operation of the clutch device.

### SUMMARY OF THE INVENTION

Accordingly, it is an object of the invention to provide a clutch device, which avoids the aforementioned disadvantages.

It is another object of the invention to provide a wet multiple-disk clutch device, which ensures sufficient hydraulic fluid supply to clutch sliding parts and smooth operation of the clutch device in presence of a transition between engagement and disengagement.

In order to accomplish the aforementioned and other objects of the present invention, a clutch device comprises an input plate connected to an input member, an output plate connected to an output member so that the output plate is brought into contact with the input plate when the clutch device is engaged, one of the input and output plates having an inner toothed portion formed on an inner peripheral portion thereof, a substantially cylindrical flanged portion attached to one of the input and output members, and having an outer toothed portion formed on an outer peripheral portion thereof and being in meshed-engagement with the inner toothed portion to allow axial sliding motion of the one of the input and output plates relative to the substantially cylindrical flanged portion and to prevent relative rotation of the one of the input and output plates to the substantially cylindrical flanged portion, the substantially cylindrical flanged portion having a portion defining a lubrication hole formed in a bottom between two adjacent teeth of the outer toothed portion, and the lubrication hole being formed as a slotted hole that elongates in a direction of a tooth trace of the outer toothed portion of the substantially cylindrical flanged portion. It is preferable that the lubrication hole is dimensioned so that an entire length of the lubrication hole, measured in the direction of the tooth trace of the outer toothed portion, is longer than a maximum moving range of the one of the input and output plates, slidable on the substantially cylindrical flanged portion. Preferably, the lubrication hole may have a substantially elliptic shape whose major axis is taken in the direction of the tooth trace of the outer toothed portion of the substantially cylindrical flanged portion. The lubrication hole may be formed in the bottom between the two adjacent teeth of the outer toothed portion of the substantially cylindrical flanged portion by machining an inner peripheral groove on an inner periphery of the substantially cylindrical flanged portion. In this case, it is preferable that the lubrication hole is formed as a substantially rectangular slotted hole that elongates in the direction of the tooth trace of the outer toothed portion of the substantially cylindrical flanged portion.

According to another aspect of the invention, a wet-disk clutch device which is hydraulically operated by hydraulic fluid pressure and whose friction disks are lubricated with hydraulic fluid, the wet-disk clutch device comprises a substantially annular input plate connected to an input member, a substantially annular output plate connected to an output member so that the output plate is brought into contact with the input plate when the clutch device is engaged, one of the input and output plates having an internal spline portion formed on an inner peripheral portion thereof, a substantially cylindrical flanged portion attached to one of the input and output members, and having an external spline portion formed on an outer peripheral portion thereof and being splined to the internal spline portion to allow axial sliding motion of the one of the input and output plates relative to the substantially cylindrical flanged portion and to prevent relative rotation of the one of the input and output plates to the substantially cylindrical flanged portion, the substantially cylindrical flanged portion having a portion defining a lubrication hole formed in a bottom between two adjacent external splines of the external spline portion, and the lubrication hole being formed as a slotted hole that elongates in a direction of a tooth trace of the external spline portion of the substantially cylindrical flanged portion.

According to a still further aspect of the invention, a wet multiple-disk clutch device which is hydraulically operated by hydraulic fluid pressure and whose friction disks are lubricated with hydraulic fluid, the wet multiple-disk clutch device comprises a lock-up clutch device built in a torque converter, the lock-up clutch device comprising a plurality of substantially annular driving plates, each of which is connected to a converter cover, a plurality of substantially annular driven plates , each of which is connected to a turbine so that the driving plates and the driven plates are alternately placed, a hydraulically-operated piston moving the driving plates into engagement with the driven plates during a lock-up mode, and moving the driving plates out of engagement with the driven plates during a torque converter mode, one of the plurality of driving plates and the plurality of driven plates having an internal spline portion formed on an inner peripheral portion thereof, a substantially cylindrical flanged portion attached to one of the converter cover and the turbine, and having an external spline portion formed on an outer peripheral portion thereof and being splined to the internal spline portion to allow axial sliding motion of the one of the plurality of driving plates and the plurality of driven plates relative to the substantially cylindrical flanged portion and to prevent relative rotation of the one of the plurality of driving plates and the plurality of driven plates to the substantially cylindrical flanged portion, means for defining a lubrication hole in a bottom between two adjacent external splines of the external spline portion of the substantially cylindrical flanged portion, and the lubrication hole being formed as a slotted hole that elongates in a direction of a tooth trace of the external spline portion of the substantially cylindrical flanged portion.

The other objects and features of this invention will become understood from the following description with reference to the accompanying drawings.

### BRIEF DESCRIPTION OF THE DRAWINGS

Fig. 1 is a longitudinal cross section showing the essential part of a lock-up torque converter incorporating therein a clutch device of the invention.

Fig. 2 is a view taken in the direction of the arrow A in Fig. 1, under a condition in which a converter cover and a lock-up piston are removed.

Fig. 3A is a longitudinal cross section showing a lubrication hole formed in a substantially cylindrical flanged portion of the clutch device of Fig. 1.

Fig. 3B is a view taken in the direction of the arrow A in Fig. 3A, illustrating a plan view of each of the lubrication holes illustrated in Fig. 3A.

Fig. 4 is a longitudinal cross sectional view showing another embodiment of the clutch device of the invention.

Fig. 5A is a longitudinal cross section showing a lubrication hole and an inner peripheral groove formed in a substantially cylindrical flanged portion of the clutch device of Fig. 4.

Fig. 5B is a view taken in the direction of the arrow A in Fig. 5A, illustrating a plan view of each of the lubrication holes illustrated in Fig. 5A.

### DESCRIPTION OF THE PREFERRED EMBODIMENTS

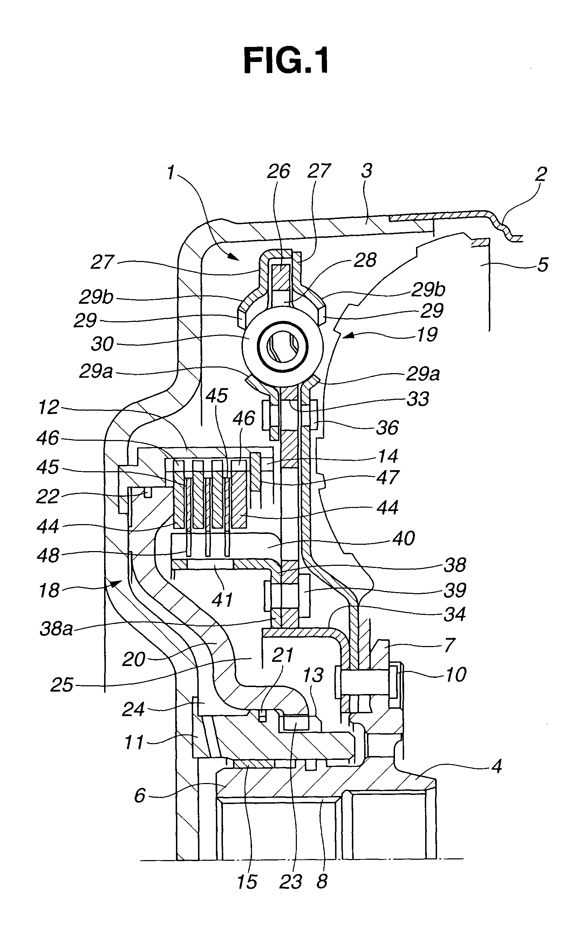

Referring now to the drawings, particularly to Figs . 1, 2, 3A and 3B, the clutch device of the invention is exemplified in a lock-up device built in a torque converter used in an automatic transmission of an automotive vehicle. The lock-up device 1 is operably provided between a converter cover 3 which is integrally connected to a pump impeller 2 and serves as an input member (a driving member), and a turbine runner 5 which is connected to a turbine hub 4 serving as an output member (a driven member). Converter cover 3 is fixedly connected to a flywheel (not shown) attached to an engine crankshaft (not shown). Turbine hub 4 is comprised of a boss portion 6 and a flanged portion 7. The boss portion 6 is formed on its inner periphery with inner splines 8 via which the turbine boss portion 6 is connectable to external splines of an output shaft or a turbine shaft 9. The inner peripheral portion of the turbine runner 5 is fixedly connected to the flanged portion 7 by means of a rivet 10. In the same manner, the inner peripheral portion of a drive plate 27 of a damping device 19 (which will be fully described later) is also riveted to the flanged portion 7 together with the inner peripheral portion of the turbine runner 5. An axially-extending inside cylinder 11 and an axially-extending outside cylinder 12 are both attached to the converter cover 3. As can be seen from Fig. 1, the left-hand end of inside cylinder 11 and the left-hand end of outside cylinder 12 are fixedly connected to the inner periphery of the left-hand side wall of the converter cover 3, so that their right-hand ends face the turbine runner 5. The inside cylinder 11 is formed on its outer periphery in a predetermined place with an outer toothed portion 13. The outside cylinder 12 is formed on it inner periphery in a predetermined place with an inner toothed portion 14. The inner periphery of inside cylinder 11 is supported on the boss portion 6 of turbine hub 4 by means of a bearing 15. Lock-up device 1 is comprised of a clutch device 18 that engages the converter cover 3 (input member) with or disengages it from the turbine hub 5 (output member), a damping device 19 such as a plurality of torsion dampers connected in series with the clutch device, and a hydraulically-operated lock-up piston (simply, a piston) 20 provided for moving the input plates 44 into and out of engagement with the output plates 45. The piston 20 is made of steel plate and formed into a substantially annular shape. Piston 20 is disposed between the inner and outer cylinders 11 and 12, such that the piston is slidable in the axial direction. The inner peripheral portion of piston 20 is in sliding-contact with the outer peripheral wall surface of inner cylinder 11 in a fluid-tight fashion by way of a seal member 21 such as an O ring. Likewise, the outer peripheral portion of piston 20 is in sliding-contact with the inner peripheral wall surface of outer cylinder 12 in a fluid-tight fashion by way of a seal member 22 such as an O ring. Piston 20 is formed on its inner periphery in a predetermined place with an inner toothed portion 23 which is in meshed-engagement with the outer toothed portion 13 of inside cylinder 11. Piston 20 is thus connected to inner cylinder 11, to allow axial sliding motion of piston 20 on inner cylinder 11, while preventing relative rotation of piston 20 to inner cylinder 11. By providing the piston between inner and outer cylinders 11 and 12, an internal space between the inner and outer cylinders is divided into a first hydraulic-fluid chamber 24 which is defined by the inner peripheral wall surface of converter cover 3, the outer peripheral wall surface of inner cylinder 11, and the left-hand side wall of piston 20 (viewing Fig. 1), and a second hydraulic-fluid chamber 25 which is defined by the inner peripheral wall surface of a substantially cylindrical flanged portion 38 (described later), the inner-cylinder outer peripheral wall surface formed with the outer toothed portion 13, and the right-hand side wall of piston 20 (viewing Fig. 1). The previously-described damping device 19 is mainly constructed by a substantially annular hub 26, a pair of drive plates (27, 27) facing respective sides of the hub 26, a set of circumferentially-elongated windows or openings (28, 29, 29), (28, 29, 29), ... , and compression spring members (30, 30, ... ) each provided in each window set (28, 29, 29). The window 28 formed in the hub 26 will be hereinafter referred to as an "inside window", while the two opposing windows (29, 29) will be hereinafter referred to as an "outside window pair". The inside window 28 and the two opposing outside windows (29, 29) included in each window set (28, 29, 29) are respectively formed in the hub 26 and drive plate pair (27, 27), so that the inside window 28 formed in hub 27 is substantially correspondingly shaped with respect to the two opposing outside windows (29, 29) formed in the two drive plate halves (right and left drive plates) constructing the drive plate pair (27, 27). By means of the compression spring members (30, 30 , ... ) each serving as a torsion spring or a torsion damper, the hub 26 and the drive plate pair (27, 27) are resiliently connected to each other, so as to permit relative motion of hub 26 to drive plate pair (27, 27) within limits. Hub 26 is made of steel plate and formed into a substantially annular shape. In the shown embodiment, inside windows (28, 28, ... ) formed in hub 26 are constructed as eight circumferentially equidistant spaced windows. Hub 26 is also formed with a plurality of circumferentially-elongated circular-arc shaped through holes (33, 33, ... ). The number of circular-arc shaped through holes (33, 33, ... ) is the same number of that of windows (28, 28, ... ) formed in the hub 26. In the shown embodiment, the circular-arc shaped through holes (33, 33, ... ) are substantially correspondingly shaped with respect to the respective windows 28 formed in hub 26, but each through hole 33 being offset radially inwards from the corresponding window 28. The inner peripheral portion of hub 26 is supported by way of a support member 34 riveted to the flanged portion 7 of turbine hub 4. The previously-noted two drive plate halves (27, 27) are made of steel plate and connected to each other by means of connecting pins (36, 36, ... ). Connecting pins (36, 36, ... ) penetrate the respective circumferentially-elongated circular-arc shaped through holes (33, 33, ... ) of hub 26, thereby allowing relative rotation of the hub 26 within the drive plate pair (27, 27) within limits. One of two drive plate halves (27, 27), that is, the right-hand side (as viewed from Fig. 1), facing the turbine runner, is fixedly connected at the inner peripheral portion to the flanged portion 7 of turbine hub 4 by the rivet 10.

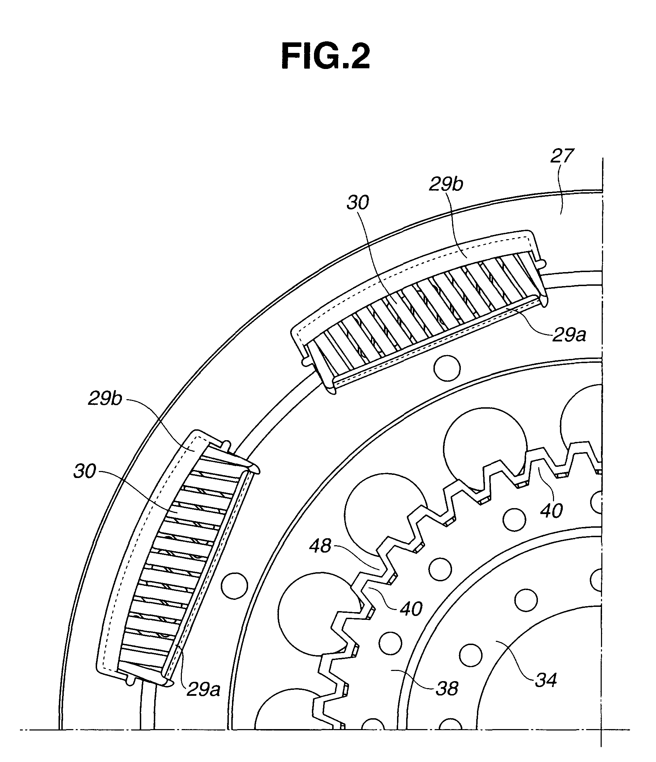

In the same manner as the eight inside windows (28, 28, ... ) formed in the hub 26, the outside windows (29, 29, ... ) formed in each of the drive plate halves (27, 27) are constructed as eight windows circumferentially equidistant spaced with each other. The radial length of each of the two opposing outside windows (29, 29) is dimensioned to be somewhat smaller than that of the inside window 28 to define an internal space that operably accommodates the corresponding compression spring member 30. Actually, as best seen in Fig. 2, each of the two opposing outside windows (29, 29) is formed at the radially inward end with a spring retaining protruded portion 29a bent along the outer periphery of compression spring member 30 and formed at the radially outward end with a spring retaining protruded portion 29b bent along the outer periphery of compression spring member 30. The two spring retaining protruded portions (29a, 29b) are cooperating with each other to partly cover compression spring member 30, thus preventing the compression spring member from falling out of the internal space defined by the window set (28, 29, 29). As clearly shown in Figs . 1 and 2, compression spring member 30 is comprised of a pair of compression springs coaxially arranged with each other and the smaller one of the compression spring pair is in nest-relation to the larger compression spring. As appreciated, one compression spring pair 30 is operably accommodated in the corresponding window set (28, 29, 29).

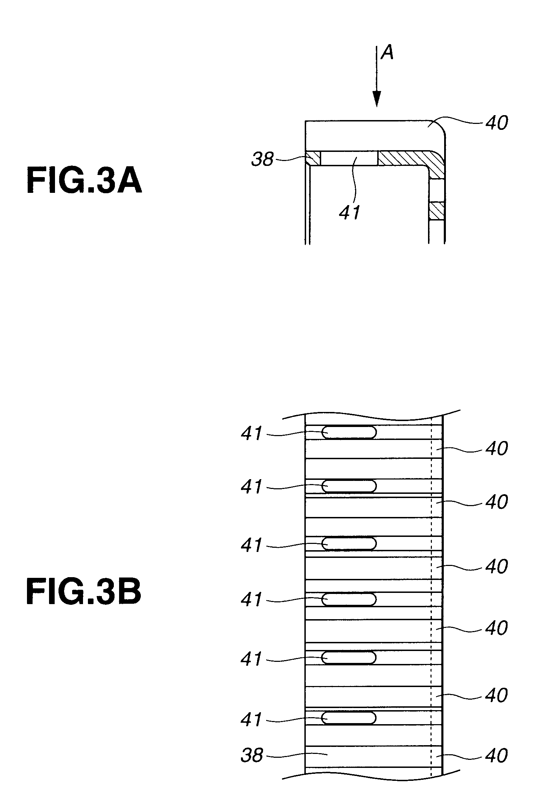

Substantially cylindrical flanged portion 38 is fixedly connected to the inner peripheral portion of hub 26 of damping device 19. Exactly speaking, an radially-inwardly-bent base portion 38a of cylindrical flanged portion 38 is riveted to the inner peripheral portion of hub 26 by means of a rivet 39. As discussed above, the right-hand half of the drive plate pair (27, 27) of damping device 19 is riveted to the turbine hub 4 serving as the output member, and thus the cylindrical flanged portion 38 riveted to the hub 26 of damping device 19 is also attached to the output member (turbine hub). As shown in Figs. 1 through 3B, the previously-noted substantially cylindrical flanged portion 38 is formed with on its outer periphery with an outer toothed portion 40 (external splines). Additionally, as best seen in Figs. 3A and 3B, a lubrication hole (a through hole) 41 is formed or bored in the bottom between the two adjacent external splines of the outer toothed portion 40, so that the second hydraulic-fluid chamber 25 is communicated with the chamber of the clutch sliding parts (input and output plates 44 and 45) via the lubrication hole 41. The lubrication hole 41 is formed as an axially-elongated slotted hole that extends in a direction of the tooth trace of outer toothed portion 40, and thus formed into a substantially elliptic shape whose major axis is taken in the direction of the tooth trace of outer toothed portion 40. The entire axial length of substantially elliptic lubrication hole 41, that is, the entire length of substantially elliptic lubrication hole 41 measured in the direction of the tooth trace of outer toothed portion 40, is set to be longer than a maximum moving range of an output plate (or a driven plate) 45 of clutch device 18. As shown in Fig. 1, clutch device 18 is arranged in series with the damping device 19. Clutch device 18 is mainly constructed by substantially annular input plates (driving disks) 44 which are linked to outer cylinder 12 fixedly connected to converter cover 3, and substantially annular output plates (driven plates) 45 which are linked to substantially cylindrical flanged portion 38 fixedly connected to hub 26 of damping device 19, so as to connect converter cover 3 with or disconnects it from damping device 19. As discussed above, the drive plate pair (27, 27) of damping device 19 is fixedly connected to turbine hub 4 serving as the output member, and thus the input plates 44 of clutch device 18 are linked or connected to the input member, while the output plates 45 of clutch device 18 are linked or connected to the output member. Therefore, the clutch device acts to engage the converter cover 3 serving as the input member with or to disengage it from the turbine hub 4 serving as the output member. Each of the input plates 44 is made of steel plate and formed on its outer periphery with an outer toothed portion 46 (an external spline portion). Outer toothed portion 46 is in meshed-engagement with the inner toothed portion 14 (the internal spline portion) of outer cylinder 12, to allow axial sliding motion of input plates 44 relative to outer cylinder 12, while preventing relative rotation of input plates 44 to outer cylinder 12. In the shown embodiment, the input plates are constructed as substantially annular four input plates. When engaging the clutch device, the input plate 44 closest to the piston 20 (that is, the leftmost input plate) is brought into contact with the side wall of the outer peripheral portion of piston 20. The input plate 44 closest to the turbine runner 5 (that is, the rightmost input plate) is retained in place by means of a snap ring or a retaining ring 47 to prevent the rightmost input plate 44 from falling off. As compared to the thickness of each input plate 44, each output plate 45 is made of relatively thin-walled steel plate, and faced on both sides with friction material. Actually, a pair of friction plates are affixed onto both sides of the output plate 45. Each output plate 45 is formed on the inner periphery with an inner toothed portion 48 (an internal spline portion). Inner toothed portion 48 is in meshed-engagement with the outer toothed portion 40 (the external spline portion) of substantially cylindrical flanged portion 38, to allow axial sliding motion of output plates 45 relative to hub 26 (or substantially cylindrical flanged portion 38), while preventing relative rotation of output plates 45 to hub 26 (or substantially cylindrical flanged portion 38). Output and input plates 45 and 44 alternate with each other, such that one output plate 45 is sandwiched between the two adjacent input plates (44, 44). When the clutch device is shifted from a disengaged state to an engaged state, the output plates 45 come into contact with the input plates 44.

With the previously-noted arrangement, during operation of the engine, a driving torque is transmitted through the engine crankshaft via the flywheel into the converter cover 3 and pump impeller 2. The converter cover 3 and pump impeller 2 rotate together. The driving torque transmitted into the converter cover 3 and pump impeller 2 can be selectively transmitted via either one of two different torque-transmission routes into the output shaft 9. One of the two different torque-transmission routes is a route via which rotational movement of the converter cover 3 is transmitted via the lock-up device 1 directly to the turbine hub 4, and then transmitted to the output shaft 9. This route is selected during a so-called lock-up mode. The other torque-transmission route is a route via which rotational movement of the pump impeller 2 is transmitted via hydraulic fluid (working oil) in the torque converter to the turbine runner 4, and then output through the turbine hub 4 to the output shaft 9. This route is selected during a so-called torque-converter mode. A hydraulic fluid pressure in the first hydraulic-fluid chamber 24 and a hydraulic fluid pressure in the second hydraulic-fluid chamber 25 are controlled by means of a hydraulic control module or a hydraulic control unit (not shown). By controlling internal working-fluid pressures in first and second hydraulic-fluid chambers 24 and 25, the torque-transmission route between the converter cover 3 and the output shaft 9 can be properly selected as hereunder described in detail.

When the hydraulic pressure in first hydraulic-fluid chamber 24 becomes higher than that in second hydraulic-fluid chamber 25 during the lock-up mode, the differential pressure between the first and second chambers 24 and 25 forces the piston 20 in a direction that the piston moves away from the inner wall surface of converter cover 3, (rightwards as viewed from the cross section of Fig. 1). Thus, the right-hand side wall surface of the outer peripheral portion of piston 20, facing the second chamber 25, comes into contact with the leftmost input plate 44 of clutch device 18. That is to say, the axial rightward movement of the leftmost input plate 44 forces the input plates 44 into contact with the output plates 45. As a result, the converter cover 3 and the turbine hub 4 are directly coupled with each other via the damping device 19 of lock-up device 1. Under such a locked-up condition, the driving torque input into converter cover 3 is transmitted through outer cylinder 12, input plates 44 and output plates 45 into substantially cylindrical flanged portion 38. Then, the driving torque is transmitted through hub 26 of damping device 19 via compression spring members (30, 30, ... ) and drive plate pair (27, 27) into turbine hub 4. And then, the driving torque is further transmitted into the output shaft 9. At this time, vibrations superimposed on the driving torque input into the converter cover 3 can be effectively absorbed or attenuated by the damping action of the compression spring members (torsion dampers).

Conversely when the operating mode of clutch device 18 is shifted from the lock-up mode to the torque converter mode and thus the hydraulic pressure in second hydraulic-fluid chamber 25 becomes higher than that in first hydraulic-fluid chamber 24, the differential pressure between the second and first chambers 25 and 24 forces the piston 20 in a direction that the piston moves toward the inner wall surface of converter cover 3, (leftwards as viewed from the cross section of Fig. 1). As a result, the pushing action of the input plates 44 of clutch device 18 is released. Therefore, the direct-coupling state between the converter cover 3 and the turbine hub 4 via the lock-up clutch is released, and thus lock-up disengages. As a consequence, according to the torque converter mode, the driving torque is transmitted from the pump impeller 2, rotating together with the converter cover 3, via the hydraulic fluid in the torque converter into the turbine runner 5, and then transmitted via the turbine hub 4 into the output shaft (turbine shaft) 9.

During the operation of clutch device 18, the hydraulic fluid (acting as lubricating oil) is supplied into the clutch device through the lubrication holes (41, 41, ... ) , each of which is formed in the bottom between the two adjacent external splines of the outer toothed portion 40 of substantially cylindrical flanged portion 38. The hydraulic fluid (lubricating oil) can be introduced through the lubrication holes 41 into the clutch device 18 by way of centrifugal force or discharge pressure created by an oil pump (not shown) serving as a fluid pressure source. That is, the lubrication holes 41 permit hydraulic fluid flow toward the clutch device for lubrication. In the clutch device of the embodiment shown in Figs. 1 - 3B, the lubrication hole 41 is formed or configured as an axially-elongated slotted hole that extends in a direction of the tooth trace of outer toothed portion 40 of substantially cylindrical flanged portion 38, and thus formed into a substantially elliptic shape whose major axis is taken in the direction of the tooth trace of outer toothed portion 40. Each lubrication hole 41 formed as an axially-elongated slotted hole provides a comparatively large opening area or a comparatively large hydraulic-fluid passage, thus ensuring sufficient hydraulic fluid flow (lubricating oil flow) towards the clutch sliding parts of the lock-up clutch device via the axially-elongated lubrication holes 41. This also avoids the disturbance in the behavior in input and/or output plates 44, 45 during the operation of clutch device 18, thereby insuring a smoother clutch operation. In addition to the above, the entire axial length of axially-elongated, substantially elliptic lubrication hole 41, that is, the entire length of substantially elliptic lubrication hole 41 measured in the direction of the tooth trace of outer toothed portion 40, is set to be longer than a maximum moving range of the output plate (or the driven plate) 45 of clutch device 18. There is no risk that the internal splines of inner toothed portion 48 of each output plate 45 are caught by the edged portions of the inner peripheries of substantially elliptic lubrication holes (41, 41, ... ). This ensures a smoother sliding motion of each output plate 45.

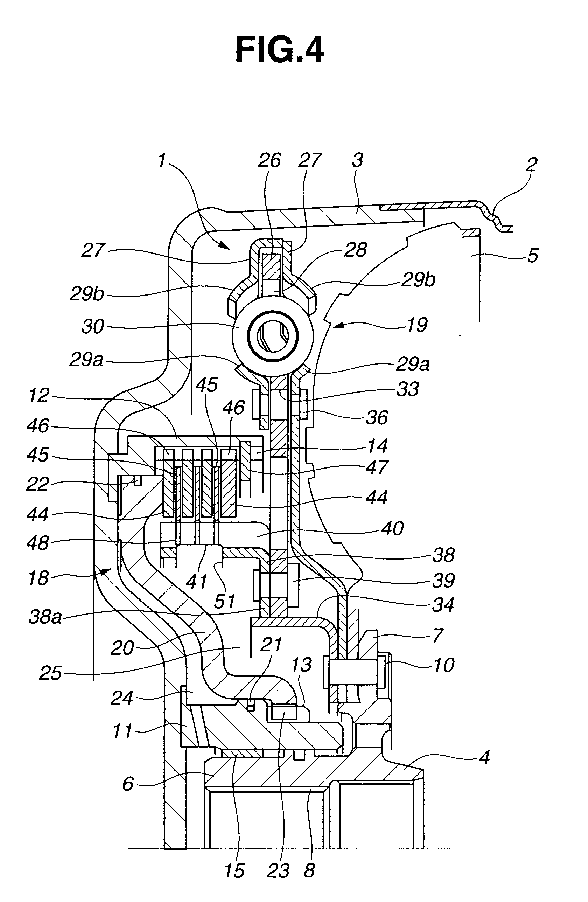

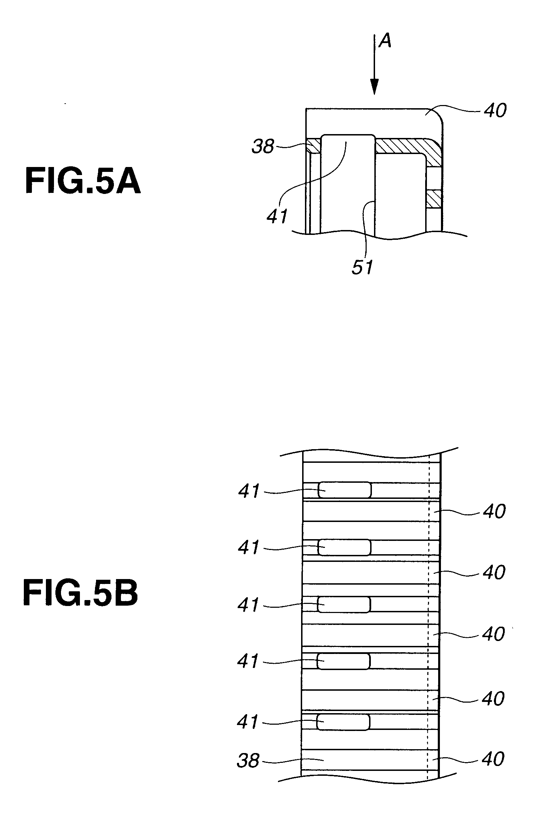

Referring now to Figs. 4, 5A and 5B, there is shown another embodiment of the clutch device of the invention. The clutch device of Figs. 4, 5A and 5B is similar to that of Figs. 1, 2, 3A and 3B, except that the lubrication hole 41 is provided by forming or machining an inner peripheral groove 51. Thus, the same reference signs used to designate elements in the clutch device shown in Figs. 1, 2, 3A and 3B will be applied to the corresponding reference signs used in the clutch device shown in Figs. 4, 5A and 5B, for the purpose of comparison of the two different clutch devices. The detailed structure of inner peripheral groove 51 will be hereinafter described with reference to the accompanying drawings, while detailed description of the elements denoted by the other reference signs will be omitted because the above description thereon seems to be self-explanatory. As best seen from Figs. 4 and 5A, the inner peripheral groove 51 having a predetermined width is formed or machined on the inner periphery of substantially cylindrical flanged portion 38. The lowermost end (bottom face) of the inner peripheral groove 51 communicates with the bottom between the two adjacent external splines of the outer toothed portion 40 of substantially cylindrical flanged portion 38 so that the lubrication hole 41 is formed in the bottom between the two adjacent external splines of the outer toothed portion 40. As can be appreciated from the view shown in Fig. 5B, in the embodiment of Figs. 4, 5A and 5B, the lubrication hole 41 is formed as an axially-elongated, substantially rectangular slotted hole that elongates in a direction of the tooth trace of outer toothed portion 40. Therefore, the clutch device of the embodiment shown in Figs. 4, 5A and 5B can provide the same operation and effects as that of Figs. 1, 2, 3A and 3B. That is, a comparatively large opening area or a comparatively large hydraulic-fluid passage can be assured by means of the lubrication holes 41 each of which is formed as an axially-elongated, substantially rectangular slotted hole, thus ensuring sufficient hydraulic fluid flow towards the clutch sliding parts of the lock-up clutch device, and also avoiding the disturbance in the behavior of input and/or output plates 44, 45 during the operation of clutch device 18, thereby insuring a smoother clutch operation. This insures a smoother clutch operation. Additionally, the entire axial length of axially-elongated, substantially rectangular lubrication hole 41, measured in the direction of the tooth trace of outer toothed portion 40, is set to be longer than a maximum moving range of the output plate 45 of clutch device 18. There is no risk that the internal splines of inner toothed portion 48 of each output plate 45 are caught by the edged portions of the inner peripheries of substantially rectangular lubrication holes (41, 41, ...), thus ensuring a smoother sliding motion of each output plate 45. In the embodiment shown in Figs. 4, 5A and 5B, the lubrication hole 41 can be easily formed or machined by forming or machining the inner peripheral groove 51 on the inner periphery of substantially cylindrical flanged portion 38. Thus , the embodiment of Figs. 4, 5A and 5B is superior in machining workability.

In the embodiments shown in Figs. 1 through 5B, substantially elliptic or substantially rectangular lubrication holes 41 are formed at substantially cylindrical flanged portion 38 to which output plates 45 are splined. It will be appreciated that the invention is not limited to the particular embodiments shown and described herein. For instance, a substantially cylindrical flanged portion may be associated with input plates 44, and thus substantially elliptic or substantially rectangular lubrication holes 41 may be formed at the substantially cylindrical flanged portion to which input plates 44 are splined. In the shown embodiments, although the clutch device of the invention is exemplified in a lock-up device 1 built in a torque converter, in lieu thereof the fundamental concept of the invention can be applied to the other clutch devices, for example, a forward clutch device used in an automatic transmission, a reverse clutch device used in an automatic transmission, and the like.

The entire contents of Japanese Patent Application No. P2000-036554 (filed February 15, 2000) is incorporated herein by reference.

While the foregoing is a description of the preferred embodiments carried out the invention, it will be understood that the invention is not limited to the particular embodiments shown and described herein, but that various changes and modifications may be made without departing from the scope or spirit of this invention as defined by the following claims.

## Claims

1. A clutch device comprising:
an input plate connected to an input member;
an output plate connected to an output member so that the output plate is brought into contact with the input plate when the clutch device is engaged;
one of the input and output plates having an inner toothed portion formed on an inner peripheral portion thereof;
a substantially cylindrical flanged portion attached to one of the input and output members, and having an outer toothed portion formed on an outer peripheral portion thereof and being in meshed-engagement with the inner toothed portion to allow axial sliding motion of the one of the input and output plates relative to the substantially cylindrical flanged portion and to prevent relative rotation of the one of the input and output plates to the substantially cylindrical flanged portion;
the substantially cylindrical flanged portion having a portion defining a lubrication hole formed in a bottom between two adjacent teeth of the outer toothed portion; and
the lubrication hole being formed as a slotted hole that elongates in a direction of a tooth trace of the outer toothed portion of the substantially cylindrical flanged portion.

2. The clutch device as claimed in claim 1, wherein the lubrication hole is dimensioned so that an entire length of the lubrication hole, measured in the direction of the tooth trace of the outer toothed portion, is longer than a maximum moving range of the one of the input and output plates, slidable on the substantially cylindrical flanged portion.

3. The clutch device as claimed in claim 1, wherein the lubrication hole has a substantially elliptic shape whose major axis is taken in the direction of the tooth trace of the outer toothed portion of the substantially cylindrical flanged portion.

4. The clutch device as claimed in claim 1, wherein the lubrication hole is formed in the bottom between the two adjacent teeth of the outer toothed portion of the substantially cylindrical flanged portion by machining an inner peripheral groove on an inner periphery of the substantially cylindrical flanged portion.

5. The clutch device as claimed in claim 4, wherein the lubrication hole is formed as a substantially rectangular slotted hole that elongates in the direction of the tooth trace of the outer toothed portion of the substantially cylindrical flanged portion.

6. A wet-disk clutch device which is hydraulically operated by hydraulic fluid pressure and whose friction disks are lubricated with hydraulic fluid, the wet-disk clutch device comprising:
a substantially annular input plate connected to an input member;
a substantially annular output plate connected to an output member so that the output plate is brought into contact with the input plate when the clutch device is engaged;
one of the input and output plates having an internal spline portion formed on an inner peripheral portion thereof;
a substantially cylindrical flanged portion attached to one of the input and output members, and having an external spline portion formed on an outer peripheral portion thereof and being splined to the internal spline portion to allow axial sliding motion of the one of the input and output plates relative to the substantially cylindrical flanged portion and to prevent relative rotation of the one of the input and output plates to the substantially cylindrical flanged portion;
the substantially cylindrical flanged portion having a portion defining a lubrication hole formed in a bottom between two adjacent external splines of the external spline portion; and
the lubrication hole being formed as a slotted hole that elongates in a direction of a tooth trace of the external spline portion of the substantially cylindrical flanged portion.

7. The wet-disk clutch device as claimed in claim 6, wherein the lubrication hole is dimensioned so that an entire length of the lubrication hole, measured in the direction of the tooth trace of the external spline portion, is longer than a maximum moving range of the one of the input and output plates, slidable on the substantially cylindrical flanged portion.

8. The wet-disk clutch device as claimed in claim 6, wherein the lubrication hole has a substantially elliptic shape whose major axis is taken in the direction of the tooth trace of the external spline portion of the substantially cylindrical flanged portion.

9. The wet-disk clutch device as claimed in claim 6, wherein the lubrication hole is formed in the bottom between the two adjacent external splines of the external spline portion of the substantially cylindrical flanged portion by machining an inner peripheral groove on an inner periphery of the substantially cylindrical flanged portion.

10. The wet-disk clutch device as claimed in claim 9, wherein the lubrication hole is formed as a substantially rectangular slotted hole that elongates in the direction of the tooth trace of the external spline portion of the substantially cylindrical flanged portion.

11. A wet multiple-disk clutch device which is hydraulically operated by hydraulic fluid pressure and whose friction disks are lubricated with hydraulic fluid, the wet multiple-disk clutch device comprising:
a lock-up clutch device built in a torque converter;
the lock-up clutch device comprising:
a plurality of substantially annular driving plates, each of which is connected to a converter cover;
a plurality of substantially annular driven plates, each of which is connected to a turbine so that the driving plates and the driven plates are alternately placed;
a hydraulically-operated piston moving the driving plates into engagement with the driven plates during a lock-up mode, and moving the driving plates out of engagement with the driven plates during a torque converter mode;
one of the plurality of driving plates and the plurality of driven plates having an internal spline portion formed on an inner peripheral portion thereof;
a substantially cylindrical flanged portion attached to one of the converter cover and the turbine, and having an external spline portion formed on an outer peripheral portion thereof and being splined to the internal spline portion to allow axial sliding motion of the one of the plurality of driving plates and the plurality of driven plates relative to the substantially cylindrical flanged portion and to prevent relative rotation of the one of the plurality of driving plates and the plurality of driven plates to the substantially cylindrical flanged portion;
means for defining a lubrication hole in a bottom between two adjacent external splines of the external spline portion of the substantially cylindrical flanged portion; and
the lubrication hole being formed as a slotted hole that elongates in a direction of a tooth trace of the external spline portion of the substantially cylindrical flanged portion.

12. The wet multiple-disk clutch device as claimed in claim 11, wherein the lubrication hole is dimensioned so that an entire length of the lubrication hole, measured in the direction of the tooth trace of the external spline portion, is longer than a maximum moving range of the one of the input and output plates, slidable on the substantially cylindrical flanged portion.

13. The wet multiple-disk clutch device as claimed in claim 11, wherein the lubrication hole has a substantially elliptic shape whose major axis is taken in the direction of the tooth trace of the external spline portion of the substantially cylindrical flanged portion.

14. The wet multiple-disk clutch device as claimed in claim 11, wherein the lubrication hole is formed in the bottom between the two adjacent external splines of the external spline portion of the substantially cylindrical flanged portion by machining an inner peripheral groove on an inner periphery of the substantially cylindrical flanged portion.

15. The wet multiple-disk clutch device as claimed in claim 14, wherein the lubrication hole is formed as a substantially rectangular slotted hole that elongates in the direction of the tooth trace of the external spline portion of the substantially cylindrical flanged portion.
